# NEUE EUROPÄISCHE PATENTSCHRIFT

(11) **EP 1 565 531 B2**
(45) Veröffentlichungstag und Bekanntmachung des Hinweises auf die Entscheidung über den Einspruch: **26.11.2014**
(45) Hinweis auf die Patenterteilung: 15.08.2007
(21) Anmeldenummer: 03795813.9
(22) Anmeldetag: 11.11.2003
(51) Int. Cl.: C09B 67/00

(54) **FESTE PIGMENTZUBEREITUNGEN, ENTHALTEND WASSERLÖSLICHE ANIONISCHE CARBOXYLATGRUPPENHALTIGE OBERFLÄCHENAKTIVE ADDITIVE**
SOLID PIGMENT PREPARATIONS CONTAINING WATER-SOLUBLE ANIONIC SURFACE-ACTIVE ADDITIVES THAT COMPRISE CARBOXYLATE GROUPS
PREPARATIONS DE PIGMENT SOLIDES, CONTENANT DES ADDITIFS TENSIOACTIFS ANIONIQUES HYDROSOLUBLES RENFERMANT DES GROUPES CARBOXYLATE

(30) Priorität: 18.11.2002 DE 10253804
(43) Veröffentlichungstag der Anmeldung: 24.08.2005
(73) Patentinhaber: BASF SE, 67056 Ludwigshafen (DE)
(72) Erfinder: REISACHER, Hansulrich, 67133 Maxdorf (DE); KLOPP, Ingo, 67256 Weisenheim (DE); HÜFFER, Stephan, 67063 Ludwigshafen (DE); KLÜGLEIN, Matthias, 67071 Ludwigshafen (DE)
(74) Vertreter: Ellwanger, Arndt
(86) Internationale Anmeldenummer: PCT/EP2003/012554
(87) Internationale Veröffentlichungsnummer: WO 2004/046251

(56) Entgegenhaltungen:
- EP-A- 0 256 427
- EP-A- 1 103 173
- WO-A-03/066743
- WO-A1-00/47681
- DE-A- 3 914 384
- DE-A- 19 905 269
- US-A- 3 385 808
- US-A- 3 458 804
- US-A- 3 947 287
- US-A- 4 089 699
- US-A- 4 340 531
- US-A- 5 130 369
- US-A- 5 814 140
- US-A- 6 056 814
- US-A- 6 063 182
- US-B1- 6 569 231
- PROF. DR. J. FALBE ET AL.: 'Römpp Chemie Lexikon', Bd. 9, 1995, GEORG THIEME VERLAG, STUTTGART Seite 5004

## Beschreibung

Die vorliegende Erfindung betrifft feste Pigmentzubereitungen, enthaltend als wesentliche Bestandteile
(A) 60 bis 95 Gew.-% mindestens eines Pigments,
(B) 5 bis 40 Gew.-% mindestens eines wasserlöslichen anionischen oberflächenaktiven Additivs aus der Gruppe der teilweise bis vollständig mit Polyetheralkoholen oder deren einseitig endgruppenverschlossenen Derivaten veresterten Homo- und Copolymerisate von ethylenisch ungesättigten Monocarbonsäuren und/oder ethylenisch ungesättigten Dicarbonsäuren, die zusätzlich keine Säurefunktion enthaltende Vinylmonomere einpolymerisiert enthalten können und der Salze dieser Homo- und Copolymerisate und
(C) 0 bis 20 Gew.-% mindestens eines nichtionischen oberflächenaktiven Additivs auf der Basis von Polyethern.

Weiterhin betrifft die Erfindung die Herstellung dieser Pigmentzubereitungen und ihre Verwendung zum Einfärben von hochmolekularen organischen und anorganischen Materialien sowie von Kunststoffen.

Zur Pigmentierung von flüssigen Systemen, wie Anstrichmitteln, Lacken, Dispersions- und Druckfarben, werden üblicherweise Pigmentpräparationen eingesetzt, die Wasser, organisches Lösungsmittel oder Mischungen davon enthalten. Neben anionischen, kationischen, nichtionischen oder amphoteren Dispergiermitteln müssen diesen Pigmentpräparationen in der Regel weitere Hilfsmittel, wie Eintrocknungsverhinderer, Mittel zur Erhöhung der Gefrierbeständigkeit, Verdicker und Antihautmittel, zur Stabilisierung zugesetzt werden.

Es bestand Bedarf an neuen Pigmentzubereitungen, die in ihren koloristischen Eigenschaften und der Dispergierbarkeit den flüssigen Präparationen vergleichbar sind, jedoch nicht die genannten Zusätze erfordern und leichter zu handhaben sind. Durch einfaches Trocknen der flüssigen Präparationen können jedoch keine festen Pigmentzubereitungen erhalten werden, die vergleichbare Anwendungseigenschaften aufweisen.

Die Einfärbung von Kunststoffen erfordert die vollständige Dispergierung des Pigments im Kunststoff, um maximale Farbstärke und Färbewirkung zu erzielen. Bei den üblicherweise eingesetzten Pulverpigmenten ist für eine solche Dispergierung ein entsprechendes Know-how und ein hoher Eintrag an Scherenergie erforderlich, was kostspielig ist. Wenn der Kunststoffverarbeiter nicht über dieses Know-how sowie die erforderlichen aufwendigen und teuren Dispergiergeräte verfügt, weisen die eingefärbten Kunststoffe oftmals sogenannte Pigmentstippen, d.h. nicht ausdispergierte Pigmentagglomerate, auf, sie sind schlecht verspinnbar und/oder besitzen hohe Druckfilterwerte. Deshalb wird oftmals auf sogenannte Masterbatches zurückgegriffen. Das sind üblicherweise feste, konzentrierte Pigmentpräparationen in einer schmelzbaren, bei Raumtemperatur festen Kunststoffmatrix, in der das pulverförmige Pigment ausdispergiert und damit feinverteilt vorliegt, d.h. die zur Dispergierung des Pulverpigments erforderliche Energie wurde bereits bei der Herstellung des Masterbatches aufgebracht.

In der DE-A-3914 384 werden Pigmentzubereitungen beschrieben, die neben dem feinteiligen Pigment (mindestens 3,9 Gew.-%) basische Pigmentderivate und (maximal 9,5 Gew.-%) Phosphorsäureester von Polyethylenglykolen und von Alkylenoxidaddukten an Oxo- und Fettalkohole enthalten und zur Herstellung von fließfähigen Druckfarben und Stammpasten eingesetzt werden.

In der EP-A-1 103 173 werden u.a. anionisch modifizierte Phenol/Styrol-Polyglykolether als Dispergiermittel für feste Pigmentzubereitungen zur Saatguteinfärbung genannt. Die explizit offenbarten Pigmentzubereitungen enthalten jedoch nur nichtionische Dispergiermittel auf der Basis von Umsetzungsprodukten von hydriertem Ricinusöl mit Ethylenoxid.

Aus der DE-A-100 35 494 sind feste Präparationen von Metallkomplexpigmenten mit eingelagertem Melamin bekannt. Als mögliche Dispergiermittel werden anionische, kationische, amphotere und nichtionische Dispergiermittel aufgeführt, explizit als Dispergiermittel eingesetzt wird ein sulfatierter ethoxylierter Fettalkohol.

In der DE-A-199 05 269 werden feste Pigmentzubereitungen beschrieben, die Dispergiermittel auf Basis nichtionisch modifizierter Pheno/Styrol-Polyglykolether oder Mischungen von ethoxyliertem Ricinusöl mit untergeordneten Mengen von diesen Ethern oder von Phosphonsäureestem und zusätzlich stets einen Verdicker auf Basis von gegebenenfalls teilhydriertem Polyvinylalkohol oder von anionischen Polyhydroxyverbindungen enthalten und zur Pigmentierung von wasserbasierenden Anwendungsmedien eingesetzt werden.

Die EP-A-256 427 betrifft Pigmentzubereitungen für Kosmetikartikel, die Mischungen von anionischen Dispergiermitteln auf Basis von Alkylglykolethersulfaten und Phosphorsäureestern von gegebenenfalls oxethylierten Fettalkoholen, in denen die Sulfate stets im Überschuß vorliegen, enthalten.

Weiterhin sind in den nicht vorveröffentlichten DE-A-102 27 657 und 102 33 081 feste Pigmentzubereitungen, die anionische oberflächenaktive Additive auf der Basis von Phosphorsäure-, Phosphonsäure-, Schwefelsäure- und/oder Sulfonsäureestern von Polyethern und deren Salzen enthalten, sowie ihre Verwendung zur Einfärbung von hochmolekularen organischen und anorganischen Materialien sowie Kunststoffen beschrieben.

Schließlich sind aus der EP-A-58 865 Pigmentpräparationen bekannt, die durch Auffällen nicht wasserlöslicher Salze anionischer Polymerer mit mehrwertigen Metallkationen auf die Pigmentteilchen hergestellt werden.

Der Erfindung lag die Aufgabe zugrunde, feste Pigmentzubereitungen bereitzustellen, die sich durch insgesamt vorteilhafte Anwendungseigenschaften, insbesondere hohe Farbstärke und besonders leichte Dispergierbarkeit in Anwendungsmedien verschiedenster Art, auszeichnen.

Demgemäß wurden Pigmentzubereitungen gefunden, welche als wesentliche Bestandteile
(A) 60 bis 95 Gew.-% mindestens eines Pigments,
(B) 5 bis 40 Gew.-% mindestens eines wasserlöslichen anionischen oberflächenaktiven Additivs aus der Gruppe der teilweise bis vollständig mit Polyetheralkoholen oder deren einseitig endgruppenverschlossenen Derivaten veresterten Homo- und Copolymerisate von ethylenisch ungesättigten Monocarbonsäuren und/oder ethylenisch ungesättigten Dicarbonsäuren, die zusätzlich keine Säurefunktion enthaltende Vinylmonomere einpolymerisiert enthalten können und der Salze dieser Homo- und Copolymerisate und
(C) 0 bis 20 Gew.-% mindestens eines nichtionischen oberflächenaktiven Additivs auf der Basis von Polyethern
enthalten.

Außerdem wurde ein Verfahren zur Herstellung der Pigmentzubereitungen gefunden, welches dadurch gekennzeichnet ist, daß man das Pigment (A) zunächst in wäßriger, zumindest einen Teil des Additivs (B) und gegebenenfalls des Additivs (C) enthaltenden Suspension einer Naßzerkleinerung unterwirft und die Suspension dann, gegebenenfalls nach Zugabe der restlichen Menge Additiv (B) und gegebenenfalls (C), trocknet.

Weiterhin wurde ein Verfahren zur Einfärbung von hochmolekularen organischen und anorganischen Materialen gefunden, welches dadurch gekennzeichnet ist, daß man die Pigmentzubereitungen durch Einrühren oder Schütteln in diese Materialien einträgt.

Schließlich wurde ein Verfahren zur Einfärbung von Kunststoffen gefunden, welches dadurch gekennzeichnet ist, daß man diese Pigmentzubereitungen durch Extrudieren, Walzen, Kneten oder Mahlen in die Kunststoffe einarbeitet.

Die erfindungsgemäßen Pigmentzubereitungen enthalten als wesentliche Bestandteile das Pigment (A) und das wasserlösliche anionische oberflächenaktive Additiv (B) sowie gewünschtenfalls zusätzlich das nichtionische Additiv (C).

Als Komponente (A) können in den erfindungsgemäßen Pigmentzubereitungen organische oder anorganische Pigmente enthalten sein. Selbstverständlich können die Pigmentzubereitungen auch Mischungen verschiedener organischer oder verschiedener anorganischer Pigmente oder Mischungen von organischen und anorganischen Pigmenten enthalten.

Die Pigmente liegen in feinteiliger Form vor. Die Pigmente haben dementsprechend üblicherweise mittlere Teilchengrößen von 0,1 bis 5 µm

Bei den organischen Pigmenten handelt es sich üblicherweise um organische Bunt- und Schwarzpigmente. Anorganische Pigmente können ebenfalls Farbpigmente (Bunt-, Schwarz-und Weißpigmente) sowie Glanzpigmente und die üblicherweise als Füllstoffe eingesetzten anorganischen Pigmente sein.

Im folgenden seien als Beispiele für geeignete organische Farbpigmente genannt

| | |
|---|---|
| - Monoazopigmente: | C.l. Pigment Brown 25; |
| | C.l. Pigment Orange 5, 13, 36, 38, 64 und 67; |
| | C.l. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247 und 251; |
| | C.I. Pigment Yellow 1, 3, 62, 65, 73, 74, 97, 120, 151, 154, 168, 181, 183 und 191; |
| | C.I. Pigment Violet 32; |
| | |
| - Disazopigmente: | C.I. Pigment Orange 16, 34, 44 und 72; |
| | C.I. Pigment Yellow 12, 13, 14, 16, 17, 81, 83, 106, 113, 126, 127, 155, 174, 176, 180 und 188; |
| | |
| - Disazokondensationspigmente: | C.I. Pigment Yellow 93, 95 und 128; |
| | C.I. Pigment Red 144, 166, 214, 220, 221, 242 und 262; |
| | C.I. Pigment Brown 23 und 41; |
| | |
| - Anthanthronpigmente: | C.l. Pigment Red 168; |
| | |
| - Anthrachinonpigmente: | C.l. Pigment Yellow 147, 177 und 199; |
| | C.l. Pigment Violet 31; |
| - Anthrapyrimidinpigmente: | C.I. Pigment Yellow 108; |
| | |
| - Chinacridonpigmente: | C.I. Pigment Orange 48 und 49; |
| | C.I. Pigment Red 122, 202, 206 und 209; |
| | C.I. Pigment Violet 19; |
| | |
| - Chinophthalonpigmente: | C.I. Pigment Yellow 138; |
| | |
| - Diketopyrrolopyrrolpigmente: | C.I. Pigment Orange 71, 73 und 81; |
| | C.I. Pigment Red 254, 255, 264, 270 und 272; |
| | |
| - Dioxazinpigmente: | C.I. Pigment Violet 23 und 37; |
| | C.I. Pigment Blue 80; |
| | |
| - Flavanthronpigmente: | C.I. Pigment Yellow 24; |
| | |
| - Indanthronpigmente: | C.I. Pigment Blue 60 und 64; |
| | |
| - Isoindolinpigmente: | C.I. Pigmente Orange 61 und 69; |
| | C.I. Pigment Red 260; |
| | C.I. Pigment Yellow 139 und 185; |
| | |
| - Isoindolinonpigmente: | C.I. Pigment Yellow 109, 110 und 173; |
| | |
| - Isoviolanthronpigmente: | C.I. Pigment Violet 31; |
| | |
| - Metallkomplexpigmente: | C.I. Pigment Red 257; |
| | C.I. Pigment Yellow 117, 129, 150, 153 und 177; |
| | C.I. Pigment Green 8; |
| | |
| - Perinonpigmente: | C.I. Pigment Orange 43; |
| | C.I. Pigment Red 194; |
| | |
| - Perylenpigmente: | C.I. Pigment Black 31 und 32; |
| | C.I. Pigment Red 123, 149, 178, 179, 190 und 224; |
| | C.I. Pigment Violet 29; |
| - Phthalocyaninpigmente: | C.l. Pigment Blue 15, 15:1, 15:2, 15:3, 15:4, 15:6 und 16; |
| | C.l. Pigment Green 7 und 36; |
| | |
| - Pyranthronpigmente: | C.l. Pigment Orange 51; |
| | C.l. Pigment Red 216; |
| | |
| - Pyrazolochinazolonpigmente: | C.l. Pigment Orange 67; |
| | C.l. Pigment Red 251; |
| | |
| - Thioindigopigmente: | C.l. Pigment Red 88 und 181; |
| | C.l. Pigment Violet 38; |
| | |
| - Triarylcarboniumpigmente: | C.I. Pigment Blue 1, 61 und 62; |
| | C.I. Pigment Green 1; |
| | C.I. Pigment Red 81, 81:1 und 169; |
| | C.I. Pigment Violet 1, 2, 3 und 27; |
| | |
| - C.I. Pigment Black 1 (Anilinschwarz); | |
| | |
| - C.I. Pigment Yellow 101 (Aldazingelb); | |
| | |
| - C.I. Pigment Brown 22. | |

Geeignete anorganische Farbpigmente sind z.B.:

| | |
|---|---|
| - Weißpigmente: | Titandioxid (C.I. Pigment White 6), Zinkweiß, Farbenzinkoxid; Zinksulfid, Lithopone; |
| | |
| - Schwarzpigmente: | Eisenoxidschwarz (C.I. Pigment Black 11), Eisen-Mangan-Schwarz, Spinellschwarz (C.I. Pigment Black 27); Ruß (C.I. Pigment Black 7); |
| | |
| - Buntpigmente: | Chromoxid, Chromoxidhydratgrün; Chromgrün (C.I. Pigment Green 48); Cobaltgrün (C.I. Pigment Green 50); Ultramaringrün; |
| | |
| | Kobaltblau (C.I. Pigment Blue 28 und 36; C.I. Pigment Blue 72); |
| | Ultramarinblau; Manganblau; |
| | |
| | Ultramarinviolett; Kobalt- und Manganviolett; |
| | |
| | Eisenoxidrot (C.l. Pigment Red 101); Cadmiumsulfoselenid (C.l. Pigment Red 108); Cersulfid (C.l. Pigment Red 265); |
| | Molybdatrot (C.l. Pigment Red 104); Ultramarinrot; |
| | |
| | Eisenoxidbraun (C.l. Pigment Brown 6 und 7), Mischbraun, Spinell- und Korundphasen (C.l. Pigment Brown 29, 31, 33, 34, 35,37,39 und 40), Chromtitangelb (C.l. Pigment Brown 24), Chromorange; |
| | |
| | Cersulfid (C.l. Pigment Orange 75); |
| | |
| | Eisenoxidgelb (C.l. Pigment Yellow 42); Nickeltitangelb (C.l. Pigment Yellow 53; C.l. Pigment Yellow 157, 158, 159, 160, 161, 162, 163, 164 und 189); Chromtitangelb; |
| | Spinellphasen (C.l. Pigment Yellow 119); Cadmiumsulfid und Cadmiumzinksulfid (C.l. Pigment Yellow 37 und 35); Chromgelb (C.l. Pigment Yellow 34); Bismutvanadat (C.l. Pigment Yellow 184). |

Als Beispiele für üblicherweise als Füllstoffe eingesetzte anorganische Pigmente seien transparentes Siliciumdioxid, Quarzmehl, Aluminiumoxid, Aluminiumhydroxid, natürliche Glimmer, natürliche und gefällte Kreide und Bariumsulfat genannt.

Bei den Glanzpigmenten handelt es sich um einphasig oder mehrphasig aufgebaute plättchenförmige Pigmente, deren Farbenspiel durch das Zusammenspiel von Interferenz-, Reflexions- und Absorptionsphänomenen geprägt ist. Als Beispiele seien Aluminiumplättchen und ein- oder mehrfach, insbesondere mit Metalloxiden beschichtete Aluminium-, Eisenoxid-und Glimmerplättchen genannt.

Als Komponente (B) enthalten die erfindungsgemäßen festen Pigmentzubereitungen wasserlösliche anionische oberflächenaktive Additive aus der Gruppe der teilweise bis vollständig mit Polyetheralkoholen oder deren einseitig endgruppenverschlossenen Derivaten veresterten Homo- und Copolmerisate von ethylenisch ungesättigten Monocarbonsäuren und/oder ethylenisch ungesättigten Dicarbonsäuren, die zusätzlich keine Säurefunktion enthaltende Vinylmonomere einpolymerisiert enthalten können und der Salze dieser Homo- und Copolymerisate.

Als Beispiele für die carboxylgruppenhaltigen Monomere und die Vinylmonomere seien genannt:
- Acrylsäure, Methacrylsäure und Crotonsäure;
- Maleinsäure, Maleinsäurenanhydrid, Maleinsäuremonoester, Maleinsäuremonoamide, Umsetzungsprodukte von Maleinsäure mit Diaminen, die zu aminoxidgruppenhaltigen Derivaten oxidiert sein können, und Fumarsäure, wobei Maleinsäure, Maleinsäureanhydrid und Maleinsäuremonoamide bevorzugt sind;
- Vinylaromaten, wie Styrol, Methylstyrol und Vinyltoluol; Ethylen, Propylen, Isobuten, Diisobuten und Butadien; Vinylether, wie Polyethylenglykolmonovinylether; Vinylester linearer oder verzweigter Monocarbonsäuren, wie Vinylacetat und Vinylpropionat; Alkylester und Arylester ethylenisch ungesättigter Monocarbonsäuren, insbesondere Acrylsäure- und Methacrylsäureester, wie Methyl-, Ethyl-, Propyl-, Isopropyl-, Butyl-, Pentyl-, Hexyl-, 2-Ethylhexyl-, Nonyl-, Lauryl- und Hydroxyethyl(meth)acrylat sowie Phenyl-, Naphthyl- und Benzyl(meth)acrylat; Dialkylester von ethylenisch ungesättigten Dicarbonsäuren, wie Dimethyl-, Diethyl-, Dipropyl-, Diisopropyl-, Dibutyl-, Dipentyl-, Dihexyl-, Di-2-ethylhexyl-, Dinonyl-, Dilauryl- und Di-2-hydroxyethylmaleinat und -fumarat; Vinylpyrrolidon; Acrylnitril und Methacrylnitril, wobei Styrol, Isobuten, Diisobuten, Acrylsäureester und Polyethylenglykolmonovinylether bevorzugt sind.

Als Beispiele für bevorzugte Homopolymerisate dieser Monomere sind insbesondere Polyacrylsäuren zu nennen. Die Copolymerisate der genannten Monomere können aus zwei oder mehreren, insbesondere drei verschiedenen Monomeren aufgebaut sein. Es können statistische Copolymerisate, alternierende Copolymerisate, Blockcopolymerisate und Pfropfcopolymerisate vorliegen. Als bevorzugte Copolymerisate seien Styrol/Acrylsäure-, Acrylsäure/Maleinsäure-, Acrylsäure/Methacrylsäure-, Butadien/Acrylsäure-, Isobuten/Maleinsäure-, Diisobuten/Maleinsäure-und Styrol/Maleinsäure-Copolymerisate, die jeweils als zusätzliche Monomerbestandteile Acrylsäureester und/oder Maleinsäureester enthalten können, genannt.

Als Additive (B) werden die Alkoxylierungsprodukte der carboxylgruppenhaltigen Polymerisate verstanden.

Hierunter sind erfindungsgemäß die teilweise bis (soweit dies möglich ist) vollständig mit Polyetheralkoholen veresterten Polymerisate zu verstehen. In der Regel beträgt der Veresterungsgrad dieser Polymerisate 30 bis 80 mol-%.

Für die Veresterung geeignet sind insbesondere die Polyetheralkohole selbst, vorzugsweise Polyethylenglykole und Polypropylenglykole, sowie deren einseitig endgruppenverschlossene Derivate, vor allem die entsprechenden Monoether, wie Monoarylether, z.B. Monophenylether, und insbesondere Mono-C₁-C₂₆-alkylether, z.B. mit Fettalkoholen veretherte Ethylen- und Propylenglykole, und die Polyetheramine, die z.B. durch Umwandlung einer teminalen OH-Gruppe der entsprechenden Polyetheralkohole oder durch Polyaddition von Alkylenoxiden an vorzugsweise primäre aliphatische Amine herstellbar sind. Bevorzugt sind dabei Polyethylenglykole, Polyethylenglykolmonoether und Polyetheramine. Die mittleren Molekulargewichte Mₙ der verwendeten Polyetheralkohole und ihrer Derivate liegen üblicherweise bei 200 bis 10 000.

Durch Steuerung des Verhältnisses von polaren zu unpolaren Gruppen können die oberflächenaktiven Eigenschaften der Additive (B) gezielt eingestellt werden.

Derartige anionische oberflächenaktive Additive (B) sind ebenfalls bekannt und im Handel erhältlich.

Die erfindungsgemäßen Pigmentzubereitungen können zusätzlich noch nichtionische oberflächenaktive Additive auf der Basis von Polyethern als Komponente (C) enthalten.

Neben den ungemischten Polyalkylenoxiden, bevorzugt C₂-C₄-Alkylenoxiden und phenylsubsitutierten C₂-C₄-Alkylenoxiden, insbesondere Polyethylenoxiden, Polypropylenoxiden und Poly(phenylethylenoxiden), sind vor allem Blockcopolymerisate, insbesondere Polypropylenoxid-und Polyethylenoxidblöcke oder Poly(phenylethylenoxid)- und Polyethylenoxidblöcke aufweisende Polymerisate, und auch statistische Copolymerisate dieser Alkylenoxide geeignet.

Diese Polyalkylenoxide können durch Polyaddition der Alkylenoxide an Startermoleküle, wie an gesättigte oder ungesättigte aliphatische und aromatische Alkohole, Phenol oder Naphthol, das jeweils durch Alkyl, insbesondere C₁-C₁₂-Alkyl, vorzugsweise C₄-C₁₂- bzw. C₁-C₄-Alkyl, substituiert sein kann, gesättigte oder ungesättigte aliphatische und aromatische Amine, gesättigte oder ungesättigte aliphatische Carbonsäuren und Carbonsäureamide hergestellt werden. Üblicherweise werden 1 bis 300 mol, bevorzugt 3 bis 150 mol, Alkylenoxid je mol Startermolekül eingesetzt.

Geeignete aliphatische Alkohole enthalten dabei in der Regel 6 bis 26 C-Atome, bevorzugt 8 bis 18 C-Atome, und können unverzweigt, verzweigt oder cyclisch aufgebaut sein. Als Beispiele seien Octanol, Nonanol, Decanol, Isodecanol, Undecanol, Dodecanol, 2-Butyloctanol, Tridecanol, Isotridecanol, Tetradecanol, Pentadecanol, Hexadecanol (Cetylalkohol), 2-Hexyldecanol, Heptadecanol, Octadecanol (Stearylalkohol), 2-Heptylundecanol, 2-Octyldecanol, 2-Nonyltridecanol, 2-Decyltetradecanol, Oleylalkohol und 9-Octadecenol sowie auch Mischungen dieser Alkohole, wie C₈/C₁₀-_{,} C₁₃/C₁₅- und C₁₆/C₁₈-Alkohole, und Cyclopentanol und Cyclohexanol genannt. Von besonderem Interesse sind die gesättigten und ungesättigten Fettalkohole, die durch Fettspaltung und Reduktion aus natürlichen Rohstoffen gewonnen werden, und die synthetischen Fettalkohole aus der Oxosynthese. Die Alkylenoxidaddukte an diese Alkohole weisen üblicherweise mittlere Molekulargewichte Mₙ von 200 bis 5000 auf.

Als Beispiele für die obengenannten aromatischen Alkohole seien neben unsubstituiertem Phenol und α- und β-Naphthol Hexylphenol, Heptylphenol, Octylphenol, Nonylphenol, Isononylphenol, Undecylphenol, Dodecylphenol, Di- und Tributylphenol und Dinonylphenol genannt.

Geeignete aliphatische Amine entsprechen den oben aufgeführten aliphatischen Alkoholen. Besondere Bedeutung haben auch hier die gesättigten und ungesättigten Fettamine, die vorzugsweise 14 bis 20 C-Atome aufweisen. Als aromatische Amine seien beispielsweise Anilin und seine Derivate genannt.

Als aliphatische Carbonsäuren eignen sich insbesondere gesättigte und ungesättigte Fettsäuren, die bevorzugt 14 bis 20 C-Atome enthalten, und hydrierte, teilhydrierte und unhydrierte Harzsäuren sowie auch mehrwertige Carbonsäuren, z.B. Dicarbonsäuren, wie Maleinsäure.

Geeignete Carbonsäureamide leiten sich von diesen Carbonsäuren ab.

Neben den Alkylenoxidaddukten an die einwertigen Amine und Alkohole sind die Alkylenoxidaddukte an mindestens bifunktionelle Amine und Alkohole von ganz besonderem Interesse.

Als mindestens bifunktionelle Amine sind zwei- bis fünfwertige Amine bevorzugt, die insbesondere der Formel H₂N-(R-NR¹)ₙ-H (R: C₂-C₆-Alkylen; R¹: Wasserstoff oder C₁-C₆-Alkyl; n: 1 bis 5) entsprechen. Im einzelnen seien beispielhaft genannt: Ethylendiamin, Diethylentriamin, Triethylentetramin, Tetraethylenpentamin, Propylendiamin-1,3, Dipropylentriamin, 3-Amino-1-ethylen-aminopropan, Hexamethylendiamin, Dihexamethylentriamin, 1,6-Bis-(3-aminopropylamino)-hexan und N-Methyldipropylentriamin, wobei Hexamethylendiamin und Diethylentriamin besonders bevorzugt sind und Ethylendiamin ganz besonders bevorzugt ist.

Vorzugsweise werden diese Amine zunächst mit Propylenoxid und anschließend mit Ethylenoxid umgesetzt. Der Gehalt der Blockcopolymerisate an Ethylenoxid liegt üblicherweise bei etwa 10 bis 90 Gew.-%.

Die Blockcopolymerisate auf Basis mehrwertiger Amine weisen in der Regel mittlere Molekulargewichte Mₙ von 1000 bis 40 000, vorzugsweise 1500 bis 30 000, auf.

Als mindestens bifunktionelle Alkohole sind zwei- bis fünfwertige Alkohole bevorzugt. Beispielsweise seien C₂-C₆-Alkylenglykole und die entsprechenden Di- und Polyalkylenglykole, wie Ethylenglykol, Propylenglykol-1,2 und -1,3, Butylenglykol-1,2 und -1,4, Hexylenglykol-1,6, Dipropylenglykol und Polyethylenglykol, Glycerin und Pentaerythrit genannt, wobei Ethylenglykol und Polyethylenglykol besonders bevorzugt und Propylenglykol und Dipropylenglykol ganz besonders bevorzugt sind.

Besonders bevorzugte Alkylenoxidaddukte an mindestens bifunktionelle Alkohole weisen einen zentralen Polypropylenoxidblock auf, gehen also von einem Propylenglykol oder Polypropylenglykol aus, das zunächst mit weiterem Propylenoxid und dann mit Ethylenoxid umgesetzt wird. Der Gehalt der Blockcopolymerisate an Ethylenoxid liegt üblicherweise bei 10 bis 90 Gew. %.

Die Blockcopolymerisate auf Basis mehrwertiger Alkohole weisen im allgemeinen mittlere Molekulargewichte Mₙ von 1000 bis 20 000, vorzugsweise 1000 bis 15 000, auf.

Derartige Alkylenoxidblockcopolymerisate sind bekannt und im Handel z.B. unter den Namen Tetronic^{®} und Pluronic^{®} (BASF) erhältlich.

Die erfindungsgemäßen Pigmentzubereitungen enthalten 60 bis 95 Gew.-% der Komponente (A), 5 bis 40 Gew.-% der Komponente (B) und 0 bis 20 Gew.-% der Komponente (C).

Enthalten die erfindungsgemäßen Pigmentzubereitungen kein nichtionisches Additiv (C), so sind abhängig von der Art des enthaltenen Pigments folgende Zusammensetzungen bevorzugt:
70 bis 90 Gew.-%, insbesondere 70 bis 85 Gew.-%, organisches Pigment (A) und 10 bis 30 Gew.-%, insbesondere 15 bis 30 Gew.-%, Additiv (B);
60 bis 80 Gew.-%, insbesondere 60 bis 75 Gew.-%, transparentes Eisenoxidpigment (A) und 20 bis 40 Gew.-%, insbesondere 25 bis 40 Gew.-%, Additiv (B);
70 bis 95 Gew.-%, insbesondere 75 bis 95 Gew.-%, anorganisches Pigment (A) (ausgenommen transparente Eisenoxidpigmente) und 5 bis 30 Gew.-%, insbesondere 5 bis 25 Gew.-%, Additiv (B).

Ist ein nichtionisches Additiv (C) enthalten, so liegt die Zusammensetzung der erfindungsgemäßen Pigmentzubereitungen vorzugsweise bei 60 bis 85 Gew.-% des Pigments (A), 5 bis 20 Gew.-% des anionischen Additivs (B) und 5 bis 15 Gew.-% des nichtionischen Additivs (C).

Die erfindungsgemäßen Pigmentzubereitungen können vorteilhaft nach dem ebenfalls erfindungsgemäßen Herstellungsverfahren erhalten werden, indem man das Pigment (A) zunächst in wäßriger, zumindest einen Teil des Additivs (B) und gegebenenfalls des Additivs (C) enthaltenden Suspension einer Naßzerkleinerung unterwirft und die Suspension dann, gegebenenfalls nach Zugabe der restlichen Menge Additiv (B) und gegebenenfalls (C), trocknet.

Das Pigment (A) kann bei dem erfindungsgemäßen Verfahren als trockenes Pulver oder in Form eines Preßkuchens eingesetzt werden.

Bei dem eingesetzten Pigment (A) handelt es sich vorzugsweise um ein gefinishtes Produkt, d.h. die Primärkomgröße des Pigments ist bereits auf den für die Anwendung gewünschten Wert eingestellt. Dieser Pigmentfinish empfiehlt sich insbesondere bei organischen Pigmenten, da die bei der Pigmentsynthese anfallende Rohware in der Regel nicht direkt für die Anwendung geeignet ist. Bei anorganischen Pigmenten, z.B. bei Oxid- und Bismutvanadatpigmenten, kann die Einstellung der Primärkomgröße auch bei der Pigmentsynthese erfolgen, so daß die anfallenden Pigmentsuspensionen direkt beim erfindungsgemäßen Verfahren eingesetzt werden können.

Da das gefinishte Pigment (A) bei der Trocknung bzw. auf dem Filteraggregat üblicherweise wieder reagglomeriert, wird es in wäßriger Suspension einer Naßzerkleinerung, z.B. einer Mahlung in einer Rührwerkskugelmühle, unterzogen.

Bei der Naßzerkleinerung sollte zumindest ein Teil des in der fertigen Pigmentzubereitung enthaltenen Additivs (B und gegebenenfalls C) anwesend sein, vorzugsweise setzt man die gesamte Menge Additiv (B und gegebenenfalls C) vor der Naßzerkleinerung zu.

In Abhängigkeit von der gewählten Trocknungsart - Sprühgranulierung und Wirbelschichttrocknung, Sprühtrocknung, Trocknung im Schaufeltrockner, Eindampfen und anschließende Zerkleinerung - kann die Teilchengröße der erfindungsgemäßen Pigmentzubereitungen gezielt gesteuert werden.

Bei Sprüh- und Wirbeischichtgranulierung können grobteilige Granulate mit mittleren Korngrößen von 50 bis 5000 µm, insbesondere 100 bis 1000 µm, erhalten werden. Durch Sprühtrocknung werden üblicherweise Granulate mit mittleren Korngrößen < 20 µm erhalten. Feinteilige Zubereitungen können bei der Trocknung im Schaufeltrockner und beim Eindampfen mit anschließender Mahlung erhalten werden. Vorzugsweise liegen die erfindungsgemäßen Pigmentzubereitungen jedoch in Granulatform vor.

Die Sprühgranulierung führt man vorzugsweise in einem Sprühturm mit Einstoffdüse durch. Die Suspension wird hier in Form größerer Tropfen versprüht, wobei das Wasser verdampft. Die Additive schmelzen bei den Trocknungstemperaturen auf und führen so zur Bildung eines weitgehend kugelförmigen Granulats mit besonders glatter Oberfläche (BET-Werte von in der Regel ≤ 15 m²/g, insbesondere ≤ 10 m²/g).

Die Gaseintrittstemperatur im Sprühturm liegt im allgemeinen bei 180 bis 300°C, bevorzugt bei 150 bis 300°C. Die Gasaustrittstemperatur beträgt in der Regel 70 bis 150°C, vorzugsweise 70 bis 130°C.

Die Restfeuchte des erhaltenen Pigmentgranulats liegt bevorzugt bei < 2 Gew.-%.

Die erfindungsgemäßen Pigmentzubereitungen zeichnen sich bei der Anwendung in eine flüssige Phase aufweisende Anwendungsmedien durch ihre hervorragenden, den flüssigen Pigmentpräparationen vergleichbaren, koloristischen Eigenschaften, insbesondere ihre Farbstärke und Brillanz, ihren Farbton und ihr Deckvermögen, und vor allem durch ihr Stir-in-Verhalten aus, d.h. sie können mit sehr geringem Energieeintrag durch einfaches Einrühren oder Schütteln in den Anwendungsmedien verteilt werden. Dies gilt insbesondere für die grobteiligen Pigmentgranulate, die die bevorzugte Ausführungsform der erfindungsgemäßen Pigmentzubereitungen darstellen.

Im Vergleich zu flüssigen Pigmentpräparationen weisen die erfindungsgemäßen Pigmentzubereitungen zudem folgende Vorteile auf: Sie haben einen höheren Pigmentgehalt. Während flüssige Präparationen bei der Lagerung zu Viskositätsänderungen neigen und mit Konservierungsmitteln und Mitteln zur Erhöhung der Gefrier- und/oder Eintrocknungsbeständigkeit versetzt werden müssen, zeigen die erfindungsgemäßen Pigmentzubereitungen sehr gute Lagerstabilität. Sie sind hinsichtlich Verpackung, Lagerung und Transport wirtschaftlich und ökologisch vorteilhaft. Da sie lösungsmittelfrei sind, weisen sie höhere Flexibilität in der Anwendung auf.

Die erfindungsgemäßen Pigmentzubereitungen in Granulatform zeichnen sich durch ausgezeichnete Abriebfestigkeit, geringe Kompaktierungs- bzw. Verklumpungsneigung, gleichmäßige Kornverteilung, gute Schütt-, Riesel- und Dosierfähigkeit sowie Staubfreiheit bei Handling und Applikation aus.

Die erfindungsgemäßen Pigmentzubereitungen eignen sich hervorragend zur Einfärbung von hochmolekularen organischen und anorganischen Materialien jeglicher Art. Flüssige Anwendungsmedien können dabei auch rein wäßrig sein, Mischungen von Wasser und organischen Lösungsmitteln, z.B. Alkoholen, enthalten oder nur auf organischen Lösungsmitteln, wie Alkoholen, Glykolethern, Ketonen, z.B. Methylethylketon, Amiden, z.B. N-Methylpyrrolidon und Dimethylformamid, Estern, z.B. Essigsäureethyl- und -butylester und Methoxypropylacetat, aromatischen oder aliphatischen Kohlenwasserstoffen, z.B. Xylol, Mineralöl und Benzin, basieren.

Gewünschtenfalls können die Zubereitungen zunächst in ein mit dem jeweiligen Anwendungsmedium verträgliches Lösungsmittel eingerührt werden, was wiederum mit sehr geringem Energieeintrag möglich ist, und dann in dieses Anwendungsmedium eingetragen werden. So können z.B. Aufschlämmungen von Pigmentzubereitungen in Glykolen oder sonstigen in der Lackindustrie üblichen Lösungsmitteln, wie Methoxypropylacetat, verwendet werden, um auf wäßrige Systeme abgestimmte Pigmentzubereitungen mit kohlenwasserstoffbasierenden Systemen oder Systemen auf Nitrocellulosebasis verträglich zu machen.

Als Beispiele für Materialien, die mit den erfindungsgemäßen Pigmentzubereitungen eingefärbt werden können, seien genannt: Lacke, z.B. Bautenlacke, Industrielacke, Fahrzeuglacke, strahlungshärtbare Lacke; Anstrichmittel, sowohl für den Bautenaußen- als auch -innenbereich, z.B. Holzanstrichmittel, Kalkfarben, Leimfarben, Dispersionsfarben; Druckfarben, z.B. Offsetdruckfarben, Flexodruckfarben, Toluoltiefdruckfarben, Textildruckfarben, strahlungshärtbare Druckfarben; Tinten, auch Ink-Jet-Tinten; Colorfilter; Baustoffe (üblicherweise wird erst nach trockenem Vermischen von Baustoff und Pigmentgranulat Wasser zugesetzt), z.B. Silikatputzsysteme, Zement, Beton, Mörtel, Gips; Asphalt, Dichtungsmassen; cellulosehaltige Materialien, z.B. Papier, Pappe, Karton, Holz und Holzwerkstoffe, die lackiert oder anderweitig beschichtet sein können; Klebstoffe; filmbildende polymere Schutzkolloide, wie sie beispielsweise in der Pharmaindustrie verwendet werden; kosmetische Artikel; Detergentien.

Die erfindungsgemäßen Pigmentzubereitungen sind auch hervorragend zur Einfärbung von Kunststoffen geeignet. Beispielhaft seien hier folgende Kunststoffklassen und Kunststofftypen genannt:
- abgewandelte Naturstoffe:
   Duroplaste, z.B. Casein-Kunststoffe; Thermoplaste, z.B. Cellulosenitrat, Celluloseacetat, Cellulosemischester und Celluloseether;
- synthetische Kunststoffe:
   Polykondensate: Duroplaste, z.B. Phenolharz, Harnstoffharz, Thioharnstoffharz, Melaminharz, ungesättigtes Polyesterharz, Allylharz, Silicon, Polyimid und Polybenzimidazol; Thermoplaste, z.B. Polyamid, Polycarbonat, Polyester, Polyphenylenoxid, Polysulfon und Polyvinylacetal;
   Polymerisate: Thermoplaste, z.B. Polyolefine, wie Polyethylen, Polypropylen, Poly-1-buten und Poly-4-methyl-1-penten, Ionomere, Polyvinylchlorid, Polyvinylidenchlorid, Polymethylmethacrylat, Polyacrylnitril, Polystyrol, Polyacetal, Fluorkunststoffe, Polyvinylalkohol, Polyvinylacetat und Poly-p-xylylen sowie Copolymere, wie EthylenNinylacetat-Copolymere, Styrol/Acrylnitril-Copolymere, Acrylnitril/Butadien/Styrol-Copolymere, Polyethylenglykolterephthalat und Polybutylenglykolterephthalat;
   Polyaddukte: Duroplaste, z.B. Epoxidharz und vernetzte Polyurethane; Thermoplaste, z.B. lineare Polyurethane und chlorierte Polyether.

Die Kunststoffe können vorteilhaft unter geringem Energieeintrag, z.B. durch gemeinsames Extrudieren (vorzugsweise mit einem Ein- oder Zweischneckenextruder), Walzen, Kneten oder Mahlen, mit den erfindungsgemäßen Pigmentzubereitungen eingefärbt werden. Sie können dabei als plastische Massen oder Schmelzen vorliegen und zu Kunststofformkörpern, Folien und Fasern verarbeitet werden.

Die erfindungsgemäßen Pigmentzubereitungen zeichnen sich auch bei der Kunststoffeinfärbung durch insgesamt vorteilhafte Anwendungseigenschaften, vor allem gute koloristische Eigenschaften, insbesondere hohe Farbstärke und Brillanz, und die guten rheologischen Eigenschaften der mit ihnen eingefärbten Kunststoffe, insbesondere niedrige Druckfilterwerte (hohe Filterstandszeiten) und gute Verspinnbarkeit, aus.

### Beispiele

### Herstellung und Prüfung von erfindungsgemäßen Pigmentzubereitungen

Die Herstellung der Pigmentzubereitungen erfolgte, indem eine Suspension von x g gefinishtem Pigment (A), y g Additiv (B) und gegebenenfalls z g Additiv (C) in 150 g Wasser (bei pH-Werten < 7 durch Zugabe von 25 gew.-%iger Natronlauge auf einen pH-Wert von 7 eingestellt) in einer Kugelmühle auf einen d₅₀-Wert von < 1 µm gemahlen und dann in einem Laborsprühturm (Mini Spray Dryer B-191, Fa. Büchi; Gaseintrittstemperatur 170°C, Gasaustrittstemperatur 70°C) sprühgetrocknet wurde.

Die Bestimmung der Farbstärke der Pigmentzubereitungen erfolgte farbmetrisch in der Weißaufhellung (Angabe der Färbeäquivalente FAE, DIN 55986) in einer wasserbasierenden Dispersionsfarbe. Dazu wurde eine Mischung von jeweils 1,25 g Pigmentzubereitung und 50 g eines wasserbasierenden Prüfbinders auf Styrol/Acrylatbasis mit einem Weißpigmentgehalt von 16,4 Gew.-% (TiO₂, Kronos 2043) (Prüfbinder 00-1067, BASF) in einem 150 ml-Kunststoffbecher mit einem Schnellrührer 3 min bei 1500 U/min homogenisiert. Die erhaltene Farbe wurde dann mit einer 100 µm-Spiralrakel auf schwarz/weißen Prüfkarton aufgezogen und 30 min getrocknet.

Die erfindungsgemäßen Pigmentzubereitungen zeigten dabei den jeweils analogen handelsüblichen wäßrigen Präparationen der Pigmente vergleichbare Farbstärken.

In der folgenden Tabelle sind die Zusammensetzungen der hergestellten Pigmentzubereitungen aufgeführt. Der Gehalt der Additive (B) und (C) bezieht sich dabei, wenn die Polymere in Lösung eingesetzt wurden, auf das gelöste Polymer selbst. Als Additive (B) und (C) wurden eingesetzt:
- B1:: wäßrige Lösung eines Copolymerisats aus 50 Gew.-% Maleinsäureanhydrid und 50 Gew.-% Diisobuten (Feststoffgehalt: 25%; pH-Wert: 10; M_{w}: 12 000) (nicht erfindungsgemäß)
- B2:: wäßrige Lösung von Polyacrylsäure (Feststoffgehalt: 45%; pH-Wert: 8,5; M_{w}: 4000) (nicht erfindungsgemäß)
- B3:: wäßrige Lösung eines Copolymerisats aus 70 Gew.-% Methacrylsäure und 30 Gew.-% Acrylsäure (Feststoffgehalt: 25%; pH-Wert: 2; M_{w}: 20 000) (nicht erfindungsgemäß)
- B4:: wäßrige Lösung eines Copolymerisats aus 70 Gew.-% Acrylsäure und 30 Gew.-% Maleinsäureanhydrid (Feststoffgehalt: 90%; pH-Wert: 8; M_{w}: 70 000) (nicht erfindungsgemäß)
- B5:: wäßrige Lösung eines Copolymerisats aus 50 Gew.-% Maleinsäureanhydrid und 50 Gew.- % Isobuten, das mit ethoxyliertem C₁₂/C₁₄-Fettalkohol (7 EO/mol Alkohol) umgesetzt wurde (Feststoffgehalt: 45%; pH-Wert: 7,5; M_{w}: 3000) (erfindungsgemäß)
- B6:: wäßrige Lösung einer Polymethacrylsäure, die mit Polyethylenglykol (Mₙ 1000) umgesetzt wurde (Feststoffgehalt: 40%; pH-Wert: 7; M_{w}: 20 000) (erfindungsgemäß)
- B7:: wäßrige Lösung eines Copolymerisats aus 30 Gew.-% Isobuten und 70 Gew. % Maleinsäureanhydrid (Feststoffgehalt: 44%; pH-Wert: 7,5; M_{w}: 4000) (nicht erfindungsgemäß)
- B8:: wäßrige Lösung von Polyacrylsäure (Feststoffgehalt: 45%; pH-Wert: 8; M_{w}: 1000) (nicht erfindungsgemäß)
- B9:: wäßrige Lösung von Polyacrylsäure (Feststoffgehalt: 45%; pH-Wert: 8; M_{w}: 30 000) (nicht erfindungsgemäß)
- B10:: wäßrige Lösung eines Copolymerisats aus 50 Gew.-% Styrol und 50 Gew.-% Maleinsäureanhydrid, das mit Polyethylenglykol (Mₙ 500) umgesetzt wurde (Feststoffgehalt: 43%; pH-Wert: 8; M_{w}: 10 000) (erfindungsgemäß)
- B11:: wäßrige Lösung eines Copolymerisats aus 50 mol-% Maleinsäureanhydrid und 50 mol-% Vinylpolyethylenoxid (Feststoffgehalt: 40%; pH-Wert: 7; M_{w}: 20 000) (nicht erfindungsgemäß)
- B12:: wäßrige Lösung eines Copolymerisats aus 40 mol-% Isobuten, 47 mol-% Maleinsäure und 3 mol-% C₁₈-Olefin (Feststoffgehalt: 25%; pH-Wert: 8; M_{w}: 10 000) (nicht erfindungsgemäß)
- C:: Blockcopolymerisat auf Basis Ethylendiamin/Propylenoxid/Ethylenoxid mit einem Ethylenoxidgehalt von 40 Gew.-% und einem mittleren Molekulargewicht Mₙ von 12 000

**Tabelle**

| Bsp | Pigment | | Additiv | | Additiv (C) |
|---|---|---|---|---|---|
| | (A) | xg | (B) | yg | zg |
| 1 * | P.Y. 184 | 90 | B4 | 10 | - |
| 2 * | P.Y.184 | 87,5 | B1 | 12,5 | - |
| 3 * | P.Y.184 | 87,5 | B2 | 12,5 | - |
| 4 * | P.Y.184 | 85 | B3 | 15 | - |
| 5 * | P.Y.184 | 85 | B8 | 15 | - |
| 6 * | P.Y.184 | 85 | B9 | 15 | - |
| 7 | P.Y.184 | 85 | B5 | 15 | - |
| 8 | P.Y.184 | 85 | B6 | 15 | - |
| 9 | P.Y.184 | 90 | B10 | 10 | - |
| 10 | P.Y.184 | 85 | B10 | 15 | - |
| 11 | P.Y.184 | 85 | B10 | 7,5 | 7,5 |
| 12 | P.Y.184 | 80 | B10 | 20 | - |
| 13 * | P.Y.184 | 85 | B12 | 15 | - |
| 14 * | P.Y.184 | 85 | B11 | 15 | - |
| 15 * | P.Br.24 | 90 | B4 | 10 | - |
| 16 * | P.Br.24 | 87,5 | B1 | 12,5 | - |
| 17 * | P.Br.24 | 87,5 | B2 | 12,5 | - |
| 18 * | P.Br.24 | 85 | B3 | 15 | - |
| 19 * | P.Br.24 | 85 | B8 | 15 | - |
| 20 * | P.Br.24 | 85 | B9 | 15 | - |
| 21 * | P.Br.24 | 85 | B7 | 15 | - |
| 22 | P.Br.24 | 85 | B5 | 15 | - |
| 23 | P.Br.24 | 85 | B6 | 15 | - |
| 24 | P.Br.24 | 92,5 | B10 | 7,5 | - |
| 25 | P.Br.24 | 90 | B10 | 10 | - |
| 26 | P.Br.24 | 85 | B10 | 15 | - |
| 27 | P.Br.24 | 85 | B10 | 7,5 | 7,5 |
| 28 | P.Br.24 | 80 | B10 | 20 | - |
| 29 * | P.Br.24 | 85 | B12 | 15 | - |
| 30 * | P.Br.24 | 85 | B11 | 15 | - |
| 31 * | P.Y.42 | 87,5 | B2 | 12,5 | - |
| 32 | P.Y.42 | 90 | B10 | 10 | - |
| 33 | P.Y.42 | 90 | B10 | 5 | 5 |
| 34 | P.Y.42 | 85 | B10 | 15 | - |
| 35 | P.Y.42 | 80 | B10 | 20 | - |
| 36 * | P.Y.42 | 85 | B12 | 15 | - |
| 37 * | P.Y.42 | 85 | B11 | 15 | - |
| 38 * | P.R.101 | 87,5 | B2 | 12,5 | - |
| 39 | P.R. 101 | 90 | B10 | 10 | - |
| 40 | P.R. 101 | 85 | B10 | 15 | - |
| 41 | P.R.101 | 80 | B10 | 20 | - |
| 42 * | P.R.101 | 85 | B12 | 15 | - |
| 43 * | P.R. 101 | 85 | B12 | 7,5 | 7,5 |
| 44 * | P.R.101 | 85 | B11 | 15 | - |
| 45 * | P.Y.42 | 70 | B2 | 30 | - |
| 46 | P.Y.42 | 70 | B10 | 30 | - |
| 47 | P.Y.42 | 65 | B10 | 35 | - |
| 48 * | P.Y.42 | 70 | B11 | 30 | - |
| 49 * | P.Y.42 | 65 | B11 | 35 | - |
| 50 | P.B. 15:1 | 75 | B10 | 25 | - |
| 51 | P.B.15:1 | 75 | B10 | 12,5 | 12,5 |
| 52 | P.B.15:3 | 75 | B10 | 25 | - |
| 53 | P.B. 15:3 | 75 | B10 | 12,5 | 12,5 |
| 54 | P.R.112 | 75 | B10 | 25 | - |
| 55 | P.R.112 | 75 | B10 | 12,5 | 12,5 |
| 56 * | P.R.112 | 75 | B1 | 25 | - |
| 57 * | P.Y.74 | 75 | B1 | 25 | - |

| | | | | | |
|---|---|---|---|---|---|
| * nicht erfindungsgemäss | | | | | |

## Patentansprüche

1. Feste Pigmentzubereitungen, enthaltend als wesentliche Bestandteile
(A) 60 bis 95 Gew.-% mindestens eines Pigments,
(B) 5 bis 40 Gew.-% mindestens eines wasserlöslichen anionischen oberflächenaktiven Additivs aus der Gruppe der teilweise bis vollständig mit Polyetheralkoholen oder deren einseitig endgruppenverschlossenen Derivaten veresterten Homo- und Copolymerisate von ethylenisch ungesättigten Monocarbonsäuren und/oder ethylenisch ungesättigten Dicarbonsäuren, die zusätzlich keine Säurefunktion enthaltende Vinylmonomere einpolymerisiert enthalten können und der Salze dieser Homo- und Copolymerisate und
(C) 0 bis 20 Gew.-% mindestens eines nichtionischen oberflächenaktiven Additivs auf der Basis von Polyethern.

2. Pigmentzubereitungen nach Anspruch 1, die in Form von Granulaten mit einer mittleren Korngröße von 50 bis 5000 µm und einer BET-Oberfläche von ≤ 15 m2/g vorliegen.

3. Verfahren zur Herstellung von Pigmentzubereitungen gemäß Anspruch 1 oder 2, **dadurch gekennzeichnet, dass** man das Pigment (A) zunächst in wässriger, zumindest einen Teil des Additivs (B) und gegebenenfalls des Additivs (C) enthaltender Suspension einer Nasszerkleinerung unterwirft und die Suspension dann, gegebenenfalls nach Zugabe der restlichen Menge Additiv (B) und gegebenenfalls (C), trocknet.

4. Verfahren zur Einfärbung von hochmolekularen organischen und anorganischen Materialen, **dadurch gekennzeichnet, dass** man Pigmentzubereitungen gemäß Anspruch 1 oder 2 durch Einrühren oder Schütteln in diese Materialien einträgt.

5. Verfahren nach Anspruch 4, **dadurch gekennzeichnet, dass** man Lacke, Anstrichmittel, Druckfarben, Tinten und Beschichtungssysteme einfärbt, die als flüssige Phase Wasser, organische Lösungsmittel oder Mischungen von Wasser und organischen Lösungsmitteln enthalten.

6. Verfahren zur Einfärbung von Kunststoffen, **dadurch gekennzeichnet, dass** man Pigmentzubereitungen gemäß Anspruch 1 oder 2 durch Extrudieren, Walzen, Kneten oder Mahlen in die Kunststoffe einarbeitet.

## Claims

1. Solid pigment preparations comprising as essential constituents
(A) from 60% to 95% by weight of at least one pigment,
(B) from 5% to 40% by weight of at least one watersoluble anionic surface-active additive selected from the group of homo- and copolymers, after partial or full esterification with polyether alcohols or their singly tipped derivatives, of ethylenically unsaturated monocarboxylic acids and/or ethylenically unsaturated dicarboxylic acids with or without vinyl monomers comprising no acid function and salts of these homo- and copolymers and
(C) from 0% to 20% by weight of at least one nonionic surface-active additive based on polyethers.

2. The pigment preparations according to claim 1 in the form of granules having an average particle size from 50 to 5000 µm and a BET surface area of ≤ 15 m²/g.

3. A process for producing pigment preparations according to claim 1 or 2, which comprises wet-comminuting the pigment (A) in aqueous suspension in the presence of some or all of additive (B) and if appropriate (C) and then drying the suspension, if appropriate after the rest of additive (B) and if appropriate (C) has been added.

4. A process for pigmenting macromolecular organic and inorganic materials, which comprises incorporating pigment preparations according to claim 1 or 2 in these materials by stirring or shaking.

5. The process according to claim 4 for pigmenting coatings, paints, inks, including printing inks, and finish systems where the liquid phase comprises water, organic solvents or mixtures of water and organic solvents.

6. A process for pigmenting plastics, which comprises incorporating pigment preparations according to claim 1 or 2 in the plastics by extrusion, rolling, kneading or grinding.

## Revendications

1. Apprêts pigmentés solides, contenant en tant qu'ingrédients principaux :
(A) 60 à 95 % en poids d'au moins un pigment,
(B) 5 à 40 % en poids d'au moins un additif tensioactif anionique soluble dans l'eau issu du groupe des homopolymères et des copolymères estérifiés partiellement à complètement avec des alcools de polyéther ou leurs dérivés unilatéralement fermés par des groupes terminaux d'acides monocarboxyliques éthyléniquement insaturés et/ou d'acides dicarboxyliques éthyléniquement insaturés qui peuvent contenir de manière supplémentaire à l'état polymérisé des monomères de vinyle ne contenant aucune fonction acide, et les sels de ces homopolymères et copolymères et
(C) 0 à 20 % en poids d'au moins un additif tensioactif non ionique à base de polyéthers.

2. Apprêts pigmentés selon la revendication 1, disponibles sous forme de granulés ayant une taille moyenne de grain de 50 à 5000 µm et une surface BET ≤ 15 m²/g.

3. Procédé de fabrication d'apprêts pigmentés selon la revendication 1 ou 2, **caractérisé en ce que** le pigment (A) est initialement soumis à un broyage humide dans une suspension aqueuse contenant au moins une partie de l'additif (B) et éventuellement de l'additif (C), et la suspension est ensuite séchée, éventuellement après ajout de la quantité restante d'additif (B) et éventuellement de (C).

4. Procédé de coloration de matériaux organiques et minéraux à haut poids moléculaire, **caractérisé en ce que** les apprêts pigmentés selon la revendication 1 ou 2 sont chargés dans ces matériaux par délayage ou secouage.

5. Procédé selon la revendication 4, **caractérisé en ce que** des vernis, des peintures, des encres d'imprimerie, des encres et des systèmes d'enduction, contenant de l'eau, des solvants organiques ou des mélanges d'eau et de solvants organiques en tant que phase liquide, sont colorés.

6. Procédé de coloration de matières plastiques, **caractérisé en ce que** des apprêts pigmentés selon la revendication 1 ou 2 sont incorporés dans les matières plastiques par extrusion, laminage, malaxage, ou broyage.
